# EUROPÄISCHE PATENTSCHRIFT

(11) **EP 2 699 793 B1**
(45) Veröffentlichungstag und Bekanntmachung des Hinweises auf die Patenterteilung: **18.05.2016**
(21) Anmeldenummer: 12727283.9
(22) Anmeldetag: 11.05.2012
(51) Int. Cl.: F03B 3/10, F03B 13/06

(54) **PUMPTURBINENANLAGE**
PUMP/TURBINE SYSTEM
ENSEMBLE POMPE-TURBINE

(30) Priorität: 22.06.2011 DE 102011105685
(43) Veröffentlichungstag der Anmeldung: 26.02.2014
(73) Patentinhaber: Voith Patent GmbH, 89522 Heidenheim (DE)
(72) Erfinder: STUMMER, Manfred, 89520 Heidenheim (DE)
(74) Vertreter: Dr. Weitzel & Partner
(86) Internationale Anmeldenummer: PCT/EP2012/002051
(87) Internationale Veröffentlichungsnummer: WO 2012/175165

(56) Entgegenhaltungen:
- AT-U2- 6 970
- CH-A- 434 981
- DE-A1- 19 534 786
- DE-A1-102004 013 907
- DE-C- 587 694
- DE-C- 606 894
- JP-A- 2001 271 736

## Beschreibung

Die Erfindung betrifft ein Verfahren zum Betreiben einer Pumpturbinenanlage im Turbinenbetrieb eine Pumpturbinenanlage nach der im Oberbegriff von Anspruch 1 näher definierten Art.

Dabei kommen als Turbinen Francis- oder Pelton-Turbinen in Betracht. Weiterhin kann sowohl die Pumpe als auch die Turbine ein- oder mehrstufig ausgeführt sein, sodass Kombinationen einer einstufigen Turbine mit einer mehrstufigen Pumpe denkbar sind, oder mehrstufige Turbinen mit einer ein- oder mehrstufiger Pumpe.

Pumpturbinenanlagen von Pumpspeicherkraftwerken weisen zwei Betriebsmodi auf, nämlich einen Turbinenbetrieb und einen Pumpbetrieb. Im letzteren pumpt die Pumpe Wasser aus einem Unterbecken in ein Oberbecken und wird dafür durch eine elektrische Maschine, welche in Triebverbindung mit der Pumpe steht, angetrieben. Die elektrische Maschine wird dabei aus einem öffentlichen Stromnetz gespeist, das heißt mit elektrischer Leistung versorgt.

Im Turbinenbetrieb hingegen treibt das Wasser, welches aus dem Oberbecken durch die Turbine in das Unterbecken strömt, die Turbine an, welche eine entsprechende Leistung auf die elektrische Maschine überträgt. Die elektrische Maschine wandelt die Antriebsleistung in elektrische Leistung um und speist diese ins Stromnetz. Somit arbeitet die elektrische Maschine einmal als Generator und einmal als Motor. Sie wird daher auch als Motor-Generator bezeichnet.

Im Gegensatz zu den oben genannten gattungsgemäßen Pumpturbinenanlagen sind auch reversible Pumpturbinenanlagen bekannt geworden, bei welchen die Turbine und Pumpe von einem gemeinsamen Laufrad gebildet wirs, sodass im Turbinenbetrieb das gemeinsame Laufrad zur Erzeugung elektrischer Leistung mit Wasser aus dem Oberbecken beaufschlagt und im Pumpbetrieb durch die elektrische Maschine angetrieben wird.

Da derartige Pumpspeicherkraftwerke für den Ausgleich von Lastspitzen im Stromnetz herangezogen werden, muss die Pumpturbine möglichst schnell in die Lage versetzt werden, Turbinenleistung zu liefern, um das Stromnetz zu unterstützen beziehungsweise rasch Pumpleistung aufzunehmen, um für primäre Netzregelung eingesetzt zu werden. Es ist daher wünschenswert, dass die Pumpturbine eines Pumpspeicherkraftwerks aus dem Turbinenbetrieb möglichst schnell in den Pumpbetrieb versetzt werden kann, und umgekehrt.

Bei solchen Anlagen kommt es häufig zu Änderungen des Volumenstromes des der Turbine zugeführten Wassers. Der Volumenstrom kann extreme Werte aufweisen, nach oben oder nach unten. Die Turbine hat einen optimalen Wirkungsgrad, der sich nahe beim Maximum des Volumenstromes ergibt. Bei kleinem Volumenstrom ist der Wirkungsgrad der Turbine relativ klein. Dies gilt besonders für extreme Teillast. Nicht nur der Wirkungsgrad wird bei Teillast schlechter, sondern auch das Kavitationsverhalten wird schlechter.

Entsprechende Pumpturbinenanlagen sind aus der DE 10 2004 013 907 A1, der DE 606894 C sowie der DE 5876946 bekannt.

Der Erfindung liegt die Aufgabe zugrunde, einen hinsichtlich des Wirkungsgrads optimierten Turbinenbetrieb einer Pumpturbinenanlage anzugeben.

Diese Aufgabe wird durch die Merkmale von Anspruch 1 gelöst.

Bei dem erfindungsgemäßen Verfahren ist es vorgesehen, dass Turbine und Pumpe im Turbinenbetrieb unter Teillast zumindest zeitweise im hydraulischen Kurzschluss betrieben werden. Ein solcher Kurzschlussbetrieb, im Turbinenbetrieb der Pumpturbinenanlage, ermöglicht eine Optimierung des Wirkungsgrads über den gesamten Nennleistungsbereich der Turbine aufgrund der Ausgestaltung mit einer Turbine, welche eine höhere Nennleistung aufweist, als die Pumpe. Der Wirkungsgrad von Turbine und Pumpe mit hydraulischem Kurzschluss gemeinsam ist dann trotz der geringeren Förderleistung im Teillastbetrieb höher als der Wirkungsgrad der Turbine im Teillastbetrieb alleine. Durch die geschickte Anwendung des Betriebs entweder der Turbine alleine oder der Turbine und der Pumpe im hydraulischen Kurzschluss, immer dann der Wirkungsgrad von Pumpe und Turbine im hydraulischen Kurzschluss größer ist, als der Wirkungsgrad der Turbine alleine, lässt sich so über den gesamten Nennleistungsbereich der Pumpturbinenanlage hinweg ein optimierter Wirkungsgrad im Turbinenbetrieb der Anlage realisieren.

Der wesentliche Gedanke bei der hier genutzten Pumpturbinenanlage besteht darin, die ausgelegte Leistung der Turbine größer zu bemessen, als die ausgelegte Leistung der Pumpe. Außerdem soll zwischen Turbine und Pumpe ein hydraulischer Kurzschluss herstellbar sein. Die beiden Maschinen haben ein Spiralgehäuse, das gegenläufig gestaltet ist. Die Druckleitungen der beiden Spiralgehäuse münden in eine gemeinsame Druckleitung ein.

Das Herstellen des hydraulischen Kurzschlusses hat den Vorteil, dass die Turbine auch bei einem geringen Volumenstrom des zugeführten Wassers in einem optimalen Bereich gefahren werden kann. Sie gibt zwar geringe Leistung ab, aber bei einem wesentlich besseren Wirkungsgrad, als dies bei bekannten Anlagen der Fall war.

Auch sind für die genannte Erweiterung des Betriebsbereiches keine zusätzlichen Einrichtungen oder Maßnahmen notwendig, wie zum Beispiel das Stabilisieren des Laufes durch Zuführen von Stabilisierungsluft. Gleichwohl können solche zusätzlichen Maßnahmen angewandt werden.

Der Unterschied der ausgelegten Leistungen von Turbinen und Pumpe wird am besten derart gewählt, dass der Wirkungsgrad der Turbine bei einer bestimmten Teillast und der Wirkungsgrad des hydraulischen Kurzschlusses optimal sind.

Die Turbine kann eine ausgelegte Leistung aufweisen, die beim 1- bis 2-fachen der ausgelegten Leistung der Pumpe liegt, beispielsweise beim 1,1-fachen, 1,2-fachen, 1,3-fachen und so weiter bis zum 2-fachen.

Es ist zweckmäßig, beide hydraulische Maschinen, somit Turbine und Pumpe, jeweils mit einem regelbaren Leitrad auszustatten. Dies ermöglicht ein geregeltes Umschalten vom hydraulischen Kurzschlussbetrieb im Turbinenbetrieb, und umgekehrt.

Die Erfindung lässt sich sehr gut bei hydraulischen Maschinen (Turbine und Pumpe) in Bauart Francis anwenden.

Die beiden hydraulischen Maschinen können jeweils ein einziges Laufrad aufweisen, aber auch mehrere Laufräder. Die Laufräder können auf einer gemeinsamen Welle oder auf unterschiedlichen Wellen angeordnet sein.

Die Erfindung ist anhand der Zeichnung näher erläutert. Darin ist im Einzelnen folgendes dargestellt:
- Figur 1: zeigt zwei in Francis-Bauart ausgeführte hydraulische Maschinen, die eine als Turbine und die andere als Pumpe, in einem Axialschnitt.
- Figur 2: zeigt in schematischer Darstellung eine Pumpturbinenanlage gemäß einer ersten Ausführungsform mit einer in Vertikalrichtung verlaufenden Welle.
- Figur 3: zeigt in schematischer Darstellung eine weitere Ausführungsform der Pumpturbinenanlage mit einer in Horizontalrichtung angeordneten Welle.
- Figur 4: zeigt in schematischer Darstellung eine dritte Ausführungsform, bei der sich eine elektrische Maschine zwischen den beiden Spiralgehäusen befindet.
- Figur 5: zeigt ein schematisches Diagramm des Wirkungsgrads der Turbine sowie der Turbine und der Pumpe im hydraulischen Kurzschluss über der Nennleistung der Turbine.

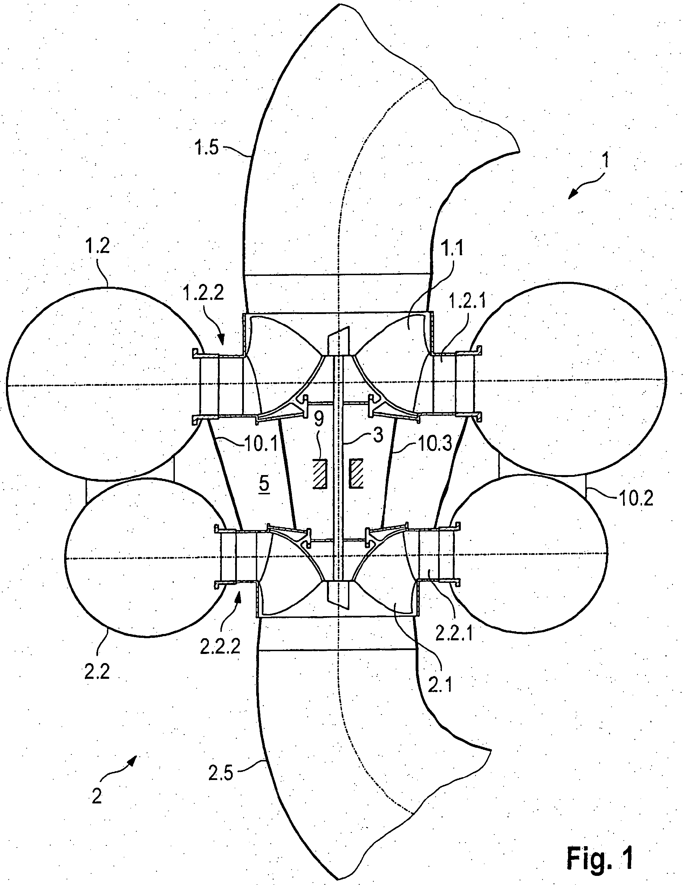

Die in Figur 1 gezeigte Pumpturbinenanlage ist wie folgt aufgebaut: Die Turbine 1 umfasst ein Turbinenlaufrad 1.1, umfassend eine Mehrzahl von Laufschaufeln. Das Turbinenlaufrad 1.1 ist drehfest mit einer Welle 3 ausgeführt, und dessen Drehachse 7 ist drehbar gelagert. Das Turbinenlaufrad 1.1 ist von einem Turbinenspiralgehäuse 1.2 umgeben. Außerdem ist dem Turbinenlaufrad 1.1 ein Kranz von Leitschaufeln vorgeschaltet.

Die Turbine 1 weist ein Turbinensaugrohr 1.5 auf. Dieses ist den Laufschaufeln nachgeschaltet und umfasst einen Eintrittsdiffusor mit einem sich hieran anschließenden Krümmer und einer sich wiederum hieran anschließenden Rohrleitung, der Strömungsquerschnitt sich in Strömungsrichtung des Wassers erweitern kann.

Vorliegend ist der Turbine 1 eine Pumpe 2 unmittelbar zugewandt. Letzteres bedeutet, dass beide hydraulische Maschinen axial benachbart angeordnet sind und sich zwischen ihnen kein Motor-Generator befindet. Die Pumpe 2 ist hier unterhalb der Turbine 1 angeordnet. Die Anordnung kann auch umgekehrt sein, Pumpe oben und Turbine unten.

Die Pumpe 2 umfasst einen ähnlichen Aufbau wie die Turbine 1: Das Pumpenlaufrad 2.1 ist ebenfalls drehfest mit der Welle 3 ausgeführt und umfasst eine Mehrzahl von Laufschaufeln. Die Pumpe 2 umfasst ein separates, von dem Turbinenspiralgehäuse 1.2 hydraulisch getrenntes Pumpenspiralgehäuse 2.2, welches das Pumpenlaufrad 2.1 umgibt. Auch dem Pumpenlaufrad ist vorzugsweise ein Kranz von Leitschaufeln 2.2.1 vorgeschaltet.

Auch die Pumpe 2 weist ein Pumpensaugrohr 2.5 auf, welches wie das der Turbine 1 ausgeführt sein kann.

Die Turbine 1 ist derart ausgelegt, dass ihre Nennleistung N_{T} größer ist, als die Nennleistung N_{P} der Pumpe 2. Im vorliegenden Falle liegt der Unterschied bei 2,5. Das heißt, dass die Nennleistung der Turbine das 2,5-fache jener der Pumpe beträgt. Auch noch größere Unterschiede sind denkbar, beispielsweise 3 oder 4. Es kommt praktisch jeder Wert zwischen 1 und ... 4 oder 5 in Betracht.

Konstruktiv werden die Unterschiede der Nennleistungen durch die Dimensionierung von Pumpe und Turbine herbeigeführt, und zwar bezüglich der Abmessungen und der gewählten Festigkeitswerte. Die Figuren stellen die Verhältnisse nur schematisch dar, ohne dass die Nennleistungs-Unterschiede zum Ausdruck kommen.

Im vorliegenden Fall liegen die beiden Spiralgehäuse 1.2 und 2.2 direkt in einem gegenseitigen Abstand übereinander. Der von ihnen gebildete Zwischenraum 5 ist vorliegend frei von einer elektrischen Maschine. Der Zwischenraum 5 wird vorliegend von den einander zugewandten Spiralgehäusen 1.2 und 2.2 begrenzt. Beide Spiralgehäuse 1.2 und 2.2 können über ein Stützelement gegeneinander abgestützt sein.

Das Stützelement kann von unterschiedlicher Gestalt sein. Im vorliegenden Falle ist es als Kegelmantel 10.1 ausgeführt. Der Kegelmantel stützt sich einerseits gegen den Traversenring 1.2.2 der Turbine, und andererseits gegen den Traversenring 2.2.2 der Pumpe. Eine weitere Abstützung 10.2, ebenfalls in Ringform, befindet sich zwischen den Spiralgehäusen 1.2 und 2.2. Auch wären Abstützungen denkbar zwischen dem Spiralgehäuse der einen Maschine, und dem Traversenring der anderen Maschine.

Eine weitere Abstützung 10.3 in Gestalt eines Zylinders befindet sich zwischen dem Turbinendeckel und dem Pumpendeckel. Die Abstützung 10.3 hat den Vorteil, dass sie einen Kraftausgleich zwischen den beiden Maschinen herbeiführt. Auch eine Abstützung zwischen dem Traversenring der einen Maschine und dem Deckel der anderen Maschine kommt in Betracht.

Wie man sieht, ist die Welle 3 in einem Lager 9 gelagert. Das Lager 9 kann in eine der Abstützungen 10.1 beziehungsweise 10.3 integriert sein.

Die folgenden Bauteile können eine einzige Baueinheit bilden: das Turbinenspiralgehäuse 1.2, das Pumpenspiralgehäuse 2.2, die Stützelemente 10.1, 10.2, 10.3, gegebenenfalls noch die Traversenringe 1.2.2 und 2.2.2 sowie das Lager 9. Die genannten Stützelemente 10.1, 10.2, 10.3 können alle drei vorhanden sein, oder nur eines der Stützelemente, oder zwei der Stützelemente.

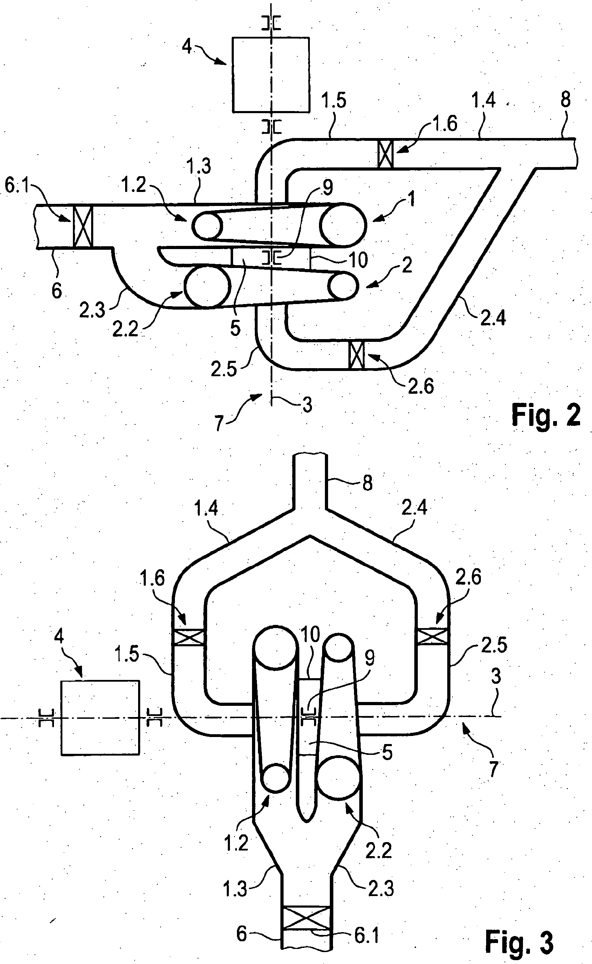

Figur 2 zeigt eine erste Ausführungsform der erfindungsgemäßen Pumpenturbinenanlage. Wie man sieht, schließt sich an das Turbinenspiralgehäuse 1.2 eine Druckleitung 1.3 sowie an das Pumpenspiralgehäuse 2.2 eine Druckleitung 2.3 an. Beide Druckleitungen 1.3, 2.3 münden in einer gemeinsamen Druckleitung 6, in welcher sich ein gemeinsames Absperrorgan 6.1 befindet.

Das gemeinsame Absperrorgan 6.1 in der Druckleitung 6 bleibt vorzugsweise stets offen und wird nur im Notschlussfall oder zu Wartungszwecken geschlossen. Dies bringt den Vorteil mit sich, dass die beiden Spiralgehäuse 1.1 und 2.2 stets mit demselben Druck, nämlich dem am Oberwasser anstehenden Oberwasserdruck beaufschlagt sind und somit keinen frequenten Lastwechseln ausgesetzt sind.

An beide Saugrohre 1.5 und 2.5 schließen sich jeweils entsprechende Saugleitungen 1.4 und 2.4 an. In beiden Saugleitungen 1.4 und 2.4 ist jeweils ein separates Absperrorgan 1.6 und 2.6 angeordnet. Beide Saugleitungen 1.4 und 2.4 münden in einer gemeinsamen Saugleitung 8.

In Triebverbindung mit der Welle 3 steht vorliegend eine elektrische Maschine 4, welche als Motor-Generator ausgeführt ist. Letztere ist oberhalb der Turbine 1 und somit außerhalb des Zwischenraums 5 axial benachbart zur Turbine 1angeordnet. Hierdurch ist es möglich im Zwischenraum 5, welcher von den beiden Spiralgehäusen 1.2 und 2.2 sowie von dem Stützelement 10 begrenzt wird ein Lager 9 einzubringen, welches beispielsweise als Führungslager oder kombiniertes Spur- und Führungslager zur Abstützung der Welle 3 dient. Dadurch wird die Laufruhe der Welle 3 nochmals verbessert.

Figur 3 zeigt eine weitere Ausführungsform der erfindungsgemäßen Pumpturbinenanlage in Anlehnung an Figur 2, deren Anordnung lediglich um 90 Grad nach links gedreht worden ist, sodass die Drehachse 3 in horizontaler Richtung verläuft und die elektrische Maschine 4 seitlich neben den beiden hydraulischen Maschinen 1 und 2 angeordnet ist. Dabei sind im Wesentlichen dieselben Bauelemente mit den gleichen Bezugszeichen, wie in Figur 2 bezeichnet, dargestellt.

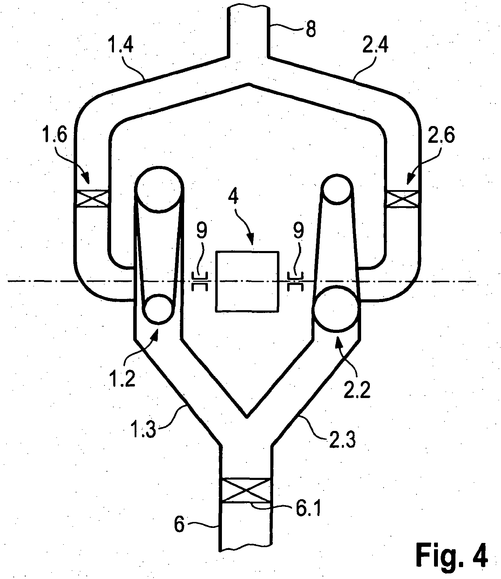

Figur 4 zeigt eine weitere Ausführungsform, bei welcher die elektrische Maschine 4 zwischen den beiden Spiralgehäusen 1.2 und 2.2 angeordnet ist, und zwar proaxial zu diesen. Die Anordnung der beiden Spiralgehäuse 1.2 und 2.2 sowie der elektrischen Maschine 4 kann eine streng symmetrische sein.

Bevorzugt könnten unabhängig von der Lage der Welle 3 beide Spiralgehäuse 1.2 und 2.2 komplett einbetoniert aber auch freistehend angeordnet sein. Der Zwischenraum 5 kann so groß ausgebildet sein, dass eine Revisionsöffnung zur Wartung beziehungsweise Montage und Demontage beider hydraulischer Maschinen problemlos erreichbar ist.

Die Erfindung lässt sich unter anderem bei den folgenden Bauarten von Anlagen verwenden:
- Einstufige Turbine mit einstufiger Pumpe.
- Einstufige Turbine mit mehrstufiger Pumpe.
- Mehrstufige Turbine mit einstufiger Pumpe.
- Mehrstufige Turbine mit mehrstufiger Pumpe.

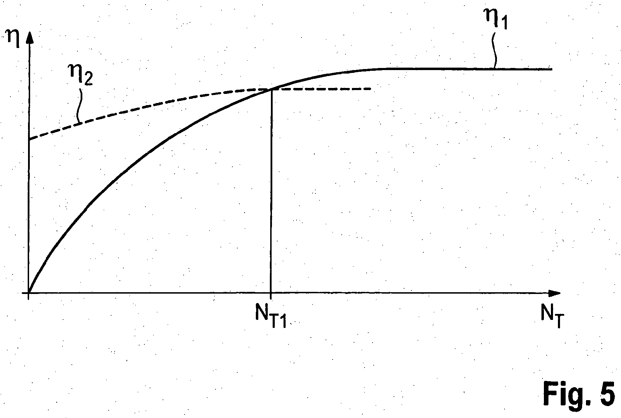

Ein Betriebsverfahren für die Pumpturbinenanlage soll nachfolgend erläutert werden. Dieses Betriebsverfahren bezieht sich dabei auf den Turbinenbetrieb der Pumpturbinenanlage und wird unter Bezugnahme auf das Diagramm in Figur 5 näher erläutert. Das Diagramm der Figur 5 zeigt mit durchgezogener Linie den Wirkungsgrad η₁ der Turbine 1 über der auf der X-Achse aufgetragenen Nennleistung N_{T} der Turbine 1. Mit gestrichelter Linie ist in dem Diagramm der Wirkungsgrad η₂ der Turbine 1 und der Pumpe 2 eingezeichnet, wenn diese im hydraulischen Kurzschluss betrieben werden. Dieser Wirkungsgrad η₂ liegt im Teillastbereich deutlich über dem Wirkungsgrad η₁ der Turbine 1 alleine.

Ein optimierter Betrieb der Pumpturbinenanlage sieht es deshalb vor, dass im Teillastbereich, und zwar insbesondere solange wie der Wirkungsgrad η₂ von Pumpe 2 und Turbine 1 im Betrieb mit hydraulischem Kurzschluss größer ist als der Wirkungsgrad η₁ der Turbine 1 alleine, der Betrieb der Pumpturbinenanlage während des Turbinenbetriebs mit Turbine 1 und Pumpe 2 im hydraulischen Kurschluss vorgenommen wird. Ab dem im Diagramm mit N_{T1} bezeichneten Bereich, in dem der Wirkungsgrad η₁ der Turbine 1 alleine und der Wirkungsgrad η₂ der Turbine 1 und der Pumpe 2 im hydraulischen Kurzschluss in etwa gleich sind, wird auf den alleinigen Betrieb der Turbine 1 gewechselt. Hierdurch wird über den gesamten verfügbaren Leistungsbereich der Turbine 1 im Turbinenbetrieb ein sehr guter Wirkungsgrad η erzielt und ein optimales Betriebsverhalten hinsichtlich Stabilität und Kavitation erreicht.

Der genaue Bereich N_{T1}, in dem der Wechsel vom Teillastbetrieb mit Pumpe 2 und Turbine 1 im hydraulischen Kurzschluss auf den reinen Betrieb der Turbine 1 erfolgt, hängt dabei unter anderem vom Verhältnis der Nennleistung N_{T} der Turbine 1 und der Nennleistung N_{P} der Pumpe 2 ab, ebenso wie von anderen unterschiedlichen Randbedingungen. Er wird typischerweise kleiner als ca. 30 % - 60 % der Nennleistung N_{T} der Turbine 1 sein.

### Bezugszeichen liste

- 1: Turbine
- 1.1: Turbinenlaufrad
- 1.2: Turbinenspiralgehäuse
- 1.2.1: Leitschaufel
- 1.2.2: Traversenring
- 1.3: Druckleitung
- 1.4: Saugleitung
- 1.5: Turbinensaugrohr
- 1.6: Absperrorgan
- 2: Pumpe
- 2.1: Pumpenlaufrad
- 2.2: Pumpenspiralgehäuse
- 2.2.2: Traversenring
- 2.2.1: Leitschaufel
- 2.3: Druckleitung
- 2.4: Saugleitung
- 2.5: Pumpensaugrohr
- 2.6: Absperrorgan
- 3: Welle
- 4: elektrische Maschine
- 6: Druckleitung
- 6.1: Absperrorgan
- 7: Drehachse
- 8: Saugleitung
- 9: Lager
- 10.1: Stützelement
- 10.2: Stützelement
- 10.3: Stützelement

## Patentansprüche

1. Verfahren zum Betreiben einer Pumpturbinenanlage im Turbinenbetrieb, umfassend
eine Turbine (1) mit einem Turbinenlaufrad (1.1) sowie einem Turbinenspiralgehäuse (1.2);
eine Pumpe (2) mit einem Pumpenlaufrad (2.1) sowie ein Pumpenspiralgehäuse (2.2);
eine elektrische Maschine (4), die in einer Triebverbindung mit der Welle (3) steht oder in eine solche bringbar ist;
zwischen Turbine (1) und Pumpe (2) ist ein hydraulischer Kurzschluss herstellbar; wobei
die Turbine (1) eine höhere Nennleistung (N_{T}) aufweist, als die Pumpe (2); die Turbine (1) und die Pumpe (2) unter Teillast zumindest zeitweise im hydraulischen Kurzschluss betrieben werden;
**dadurch gekennzeichnet, dass**
der Betrieb der Turbine (1) und der Pumpe (2) im hydraulischen Kurzschluss immer dann erfolgt, wenn der Wirkungsgrad (η₂) von Pumpe (2) und Turbine (1) im hydraulischen Kurzschluss größer ist, als der Wirkungsgrad (η₁) der Turbine (1) alleine.

## Claims

1. A method of operating a pump turbine plant during the operation of the turbine, comprising
a turbine (1) with a turbine impeller (1.1) as well as a turbine spiral casing (1.2);
a pump (2) with a pump impeller (2.1) as well as a pump spiral housing (2.2); an electrical machine (4), which is in a drive connection with the shaft (3) or can be brought into said connection;
a hydraulic short-circuit can be created between turbine (1) and pump (2); whereas
the turbine (1) has a greater rated power (N_{T}) than the pump (2);
the turbine (1) and the pump (2) are operated under partial load at least temporarily in the hydraulic short-circuit;
**characterised in that**
that the operation of the turbine (1) or of the pump (2) always takes place in the hydraulic short-circuit, if the degree of efficiency (η₂) of the pump (2) and of the turbine (1) in the hydraulic short-circuit is greater than the degree of efficiency (η₁) of the turbine (1) on its own.

## Revendications

1. Procédé pour l'exploitation d'une station de turbine-pompe fonctionnant comme turbine, comprenant une turbine (1) avec une roue de turbine (1.1) ainsi qu'un carter de turbine en spirale (1.2) ;
une pompe (2) avec une roue de pompe (2.1) ainsi qu'un carter de pompe en spirale (2.2) ;
une machine électrique (4) qui est ou qui peut être mise en liaison motrice avec l'arbre (3) ;
un court-circuit hydraulique peut être réalisé entre la turbine (1) et la pompe (2) ; la turbine (1) ayant une puissance nominale (N_{T}) plus importante que la pompe (2) ;
la turbine (1) et la pompe (2) étant mises, en charge partielle, au moins temporairement en court-circuit hydraulique ;
**caractérisé en ce qu'**un fonctionnement en court-circuit hydraulique de la turbine (1) et de la pompe (2) est toujours réalisé quand le rendement (η₂) de la pompe (2) et de la turbine (1) en court-circuit hydraulique est plus important que le rendement (η₁) atteint par la turbine (1) seule.
